# EUROPÄISCHE PATENTANMELDUNG

(11) **EP 0 565 845 A1**
(43) Veröffentlichungstag der Anmeldung: **20.10.1993**
(21) Anmeldenummer: 93103328.6
(22) Anmeldetag: 02.03.1993
(51) Int. Cl.: C02F 9/00

(54) **Verfahren zur Aufarbeitung einer anorganisch verunreinigten Abfallsalzsäure aus der Wäsche eines Abgases**

(30) Priorität: 05.03.1992 DE 4206965
(71) Anmelder: L. & C. Steinmüller GmbH, D-51641 Gummersbach (DE)
(72) Erfinder: Jaradi, Hussein, W-5415 Nauort (DE)
(74) Vertreter: Carstens, Wilhelm, Dipl.-Phys.

(57) **Zusammenfassung**

Bei einem Verfahren zur Aufarbeitung einer anorganisch verunreinigten Abfallsalzsäure aus der Wäsche eines mindestens HCl-, Brom-, Jod-, HF- und schwermetallhaltigen Abgases mit Wasser, gegebenenfalls mit nachfolgender Behandlung mit einer Absorptionsmittel-Lösung zur Entfernung von Schwefeldioxid, insbesondere aus der Wäsche von Rauchgasen aus Müllverbrennungsanlagen wird vorgesehen,
die Reinheit der Wertstoffe dadurch zu verbessern, daß die Abfallsalzsäure in einer ersten Eindampfstufe im wesentlichen bis zur azeotropen Konzentration unter Austreiben von Wasser aufkonzentriert wird,
in einer zweiten Eindampfstufe Säure mit Wasser aus dem Konzentrat ausgetrieben wird,
die ausgetriebene Säure zusammen mit dem Wasser kondensiert und mit einem Neutralisationsmittel neutralisiert wird und in einer mindestens einstufigen Eindampfkristallisation Salz als Wertstoff aus Mutterlauge auskristallisiert wird,
Jod und Brom durch ein Oxidationsmittel, vorzugsweise Chlor, oxidiert und danach ohne Oxidation abgezogen werden oder mit der Mutterlauge der Eindampfkristallisation abgezogen werden, und der Eindampfrückstand aus der zweiten Eindampfstufe zu einem Reststoff aufgearbeitet wird.

## Beschreibung

Die Erfindung betrifft ein Verfahren zur Aufarbeitung einer anorganisch verunreinigten Abfallsalzsäure aus der Wäsche eines mindestens HCl-, Brom-, Jod-, HF- und schwermetallhaltigen Abgases mit Wasser, gegebenenfalls mit nachfolgender Behandlung mit einer Absorptionsmittel-Lösung zur Entfernung von Schwefeldioxid, insbesondere aus der Wäsche von Rauchgasen aus Müllverbrennungsanlagen.

Aus S. 34 der DE-Z. "Chemie-Technik", 18. Jahrgang (1969), Nr. 5, S. 30 - 39 "Aufarbeitung von Abwässern aus Rauchgasreinigungsanlagen" ein Verfahren zur Reinigung von Rauchgasen aus Müllverbrennungsanlagen mit einer Natronlaugenwäsche bekannt. Hierbei werden Chlorwasserstoff und Fluorwasserstoff in einer ersten sauren Wäscherstufe mit Wasser bzw. Calciumchlorid-Lösung absorbiert, während in einer weiteren Wäscherstufe mit Natronlauge das Schwefeldioxid entfernt wird. Die Wäscherteilströme werden jedoch nach der Rauchgasreinigung wieder zusammengeführt und unter Zugabe von Absorptionsmitteln aufgearbeitet, wobei Natriumchlorid und Gips hergestellt werden. Die Abtrennung von HCl, HF und Schwermetall ist nach diesem Verfahren zur Erzeugung eines möglichst reinen Wertproduktes unzureichend.

Aus derselben DE-Z., S. 33 ist weiterhin ein Verfahren zur Aufarbeitung von REA-Abwasser aus der Kalkwäsche von Rauchgasen aus der Müllverbrennung bekannt, bei dem aus dem REA-Abwasser in mehreren Verfahrensschritten zuerst Gips und Schwermetalle abgetrennt werden und sodann das Abwasser einer Verdampfungskristallisation unterworfen wird. Bei der Reststoffaufbereitung durch Trennen und Trocknen wird Calciumchloridhydrat als Wertstoff gewonnen. Dieses Verfahren hat den Nachteil, daß insbesondere die Abtrennung von Schwermetallen unzureichend ist, so daß der Wertstoff erhebliche Verunreinigen aufweist, deren Beseitigung mit einem erheblichen verfahrenstechnischen und somit kostenintensiven Aufwand verbunden ist.

Es ist daher die Aufgabe der vorliegenden Erfindung, ein Verfahren zur Aufarbeitung einer anorganisch verunreinigten Abfallsalzsäure aus der Wäsche eines mindestens HCl-, Brom-, Jod- HF und schwermetallhaltigen Abgases mit Wasser, gegebenenfalls mit nachfolgender Behandlung mit einer Absorptionsmittel-Lösung zur Entfernung von Schwefeldioxid, insbesondere aus der Wäsche von Rauchgasen aus Müllverbrennungsanlagen anzugeben, bei dem die Reinheit der Wertstoffe verbessert wird.

Diese Aufgabe wird erfindungsgemäß dadurch gelöst, daß die Abfallsalzsäure in einer ersten Eindampfstufe im wesentlichen bis zur azeotropen Konzentration unter Austreiben von Wasser aufkonzentriert wird, in einer zweiten Eindampfstufe Säure mit Wasser aus dem Konzentrat ausgetrieben wird, die ausgetriebene Säure zusammen mit dem Wasser kondensiert und mit einem Neutralisationsmittel neutralisiert wird, und in einer mindestens einstufigen Eindampfkristallisation Salz als Wertstoff aus Mutterlauge auskristallisiert wird, Jod und Brom durch ein Oxidationsmittel, vorzugsweise Chlor, oxidiert und danach abgezogen werden oder ohne Oxidation mit der Mutterlauge der Eindampfkristallisation abgezogen werden, und der Eindampfrückstand aus der zweiten Eindampfstufe zu einem Reststoff aufgearbeitet wird.

Durch das erfindungsgemäße Verfahren wird ein Salz als Wertprodukt mit verbesserter Reinheit gewonnen. Zudem wird der apparatetechnische Aufwand gering gehalten.

Ein weiterer Vorteil ergibt sich daraus, daß die erste Eindampfstufe mit den aus der zweiten Eindampfstufe ausgetriebenen Säurebrüden beheizt wird und die Säurekonzentration in der ersten Stufe mit einem wässrigen Verdünnungsmittel geregelt wird. Dadurch wird zum einen die erste Verdampferstufe auf einfachste Weise geheizt, wobei gleichzeitig Säurebrüden kondensiert werden. Durch die Regelung der Säurekonzentration mit einem wässrigen Verdünnungsmittel wird ein Austreiben von Salzsäure in der ersten Eindampfstufe vermieden.

Es ist weiterhin von Vorteil, daß als Verdünnungsmittel nach der ersten Eindampfstufe kondensiertes Wasser, nach der Eindampfkristallisation kondensiertes Wasser und/oder bei der Reststoffaufarbeitung anfallendes Wasser der ersten Eindampfstufe zugeführt wird. Dadurch, daß als Verdünnungsmittel Prozeßabwässer verwendet werden, wird der verfahrenstechnische Aufwand verringert.

In vorteilhafter Ausgestaltung der Erfindung werden Jod und Brom vor der Neutralisation aus der kondensierten Säure-Lösung oxidiert, womit bereits frühzeitig unerwünschte leichter flüchtige Stoffe entfernt werden.

Von Vorteil ist es auch, wenn Jod und Brom vor der Eindampfkristallisation in der Neutralisationslösung oxidiert werden. Es kann aber auch in manchen Fällen von Vorteil sein, daß Jod und Brom in der Mutterlauge der Eindampfkristallisation oxidiert werden.

Eine weitere vorteilhafte Ausgestaltung der Erfindung ist es, daß die Oxidation an zur Eindampfkristallisation nach einer Feststoffabtrennung des Salzes als Wertstoff zurückzuführender Mutterlauge erfolgt.

Wird der Verdampfungsrückstand der zweiten Eindampfstufe neutralisiert eingedampft und zu einem Reststoff getrocknet, so ist es von Vorteil, daß Mutterlauge der Eindampfkristallisation zusammen mit dem Verdampfungsrückstand neutralisiert wird.

Für den Prozeßablauf ist es von Vorteil, daß die Abfallsalzsäure in der ersten Eindampfstufe bei einem Druck zwischen 10 und 150 mbar aufkonzentriert wird, und die Säurelösung in der zweiten Eindampfstufe bei einem Druck zwischen 37 und 850 mbar aus dem Konzentrat ausgetrieben wird.

Es ist zweckmäßig, daß als Neutralisationsmittel K, Na, Ca, Mg, NaOH, KOH, Ca(OH)₂, Mg(OH)₂ oder Mischungen hiervon zugesetzt werden.

Ebenfalls ist es zweckmäßig, daß zur Fluoridausfällung CaCl₂, KaCl , MgCl₂ oder Mischungen hiervon der zweiten Eindampfstufe zugesetzt werden.

Das erfindungsgemäße Verfahren soll nun anhand der beigefügten Figuren näher erläutert werden. Es zeigen
- FIG. 1: ein Blockschaltbild und
- FIG. 2: ein Blockschaltbild
Eine anorganisch verunreinigte Abfallsalzsäure 1, wie sie nach der Wäsche von Rauchgasen aus Müllverbrennungsanlagen anfällt, wird einer ersten Eindampfstufe 2 unterworfen. Bei einem Eindampfdruck zwischen 10 - 150 mbar und einer Eindampftemperatur zwischen 8° und 54°C wird die Abfallsalzsäure 1 aufkonzentriert, wobei im wesentlichen Wasserdampf 3 ausgetrieben wird. Die Salzsäurekonzentration liegt dabei in einem Bereich unterhalb der azeotropen Konzentration von ca. 20%. Das Konzentrat 4 wird einer mit Heizdampf 5a betriebenen zweiten Eindampfstufe 5 unterworfen, wobei bei 37 - 850 mbar Eindampfdruck und 28 - 95°C Eindampftemperatur leicht flüchtige Bestandteile 6, wie Wasserdampf, Säure, Brom, und Jod aus dem Konzentrat 4 ausgetrieben werden. Die ausgetriebenen Brüden 6 werden der ersten Eindampfstufe 2 über Leitung 7 als Heizmittel zugeführt und dort kondensiert.

Stellt sich in der ersten Eindampfstufe 2 eine Säurekonzentration oberhalb der azeotropen Konzentration ein, wird der ersten Eindampfstufe 2 ein wäßriges Verdünnungsmittel 10 geregelt zugegeben. Diese Maßnahme ermöglicht die Behandlung einer evtl. kurzfristig mit einer zu hohen Konzentration herangeführten Abfallsalzsäure sowie einen fortlaufenden Betrieb der auch heizmittelseitig hintereinander geschalteten Eindampfstufen.

Die Ermittlung der Regelmenge des Verdünnungsmittels 10 erfolgt durch eine Leitfähigkeitsmessung 11 des aus der ersten Stufe kondensierten Wasserdampfes 10. Aus der Leitfähigkeit wird die Regelgröße ermittelt und auf ein stufenlos verstellbares Absperrorgan 12, das den Zufluß des Verdünnungsmittels 10 entsprechend einstellt, übertragen.

Als wäßriges Verdünnungsmittel 10 kann das Kondensat eines der ersten Eindampfstufe 2 nachgeschalteten Kondensators 13 eingesetzt werden.

Das Kondensat 8 wird einer Neutralisation 9 zugeführt und mit einem Neutralisationsmittel 14, wie K, Na, Ca, Mg, NaOH, KOH, Ca (OH)₂, Mg(OH)₂ oder Mischungen hiervon neutralisiert.

Die Neutralisationslösung 15 wird einer Eindampfkristallisation 16 unterworfen, wobei aus der Mutterlauge 17 Salz als Wertstoff 18 beispielsweise CaCl₂ oder NaCl auskristallisiert und nach Abtrennung in einer Trennstufe 19, wie z.B. einem Zyklon abgezogen wird. Die weitgehend salzfreie Mutterlauge wird nach der Trennstufe 18 einer Oxidation 20 mit Chlor als Oxidationsmittel 21 zugeführt, wobei Brom und Jod als weiterer Wertststoff 22 ausgetrieben werden. Die vom Salz 18, Brom und Jod im wesentlichen getrennte Mutterlauge wird zur Eindampfkristallisation 16 zurückgeführt.

Zur Ausfällung von Fluoriden aus dem Konzentrat 4 wird der zweiten Eindampfstufe 5 ein Fällungsmittel 23, wie CaCl₂, KCl, MgCl₂ oder Mischungen hiervon zugesetzt.

Der Eindampfrückstand 24 wird mit dem Neutralisationsmittel 14 einer Neutralisation 25 zugeführt und danach durch Eindampfung und Trocknung 26 zu einem Reststoff 27 aufgearbeitet, der vorzugsweise deponiert wird.

Neben dem nach der ersten Eindampfstufe 2 kondensierten Wasser bzw. säurehaltigem Wasser können auch die Wasser 10, die nach der Eindampfkristallisation 15, 13 und nach der Reststoffaufarbeitung 26, 13 anfallen, teilweise oder vollständig, oder miteinander vermischt, als Verdünnungsmittel der ersten Eindampfstufe zugesetzt werden.

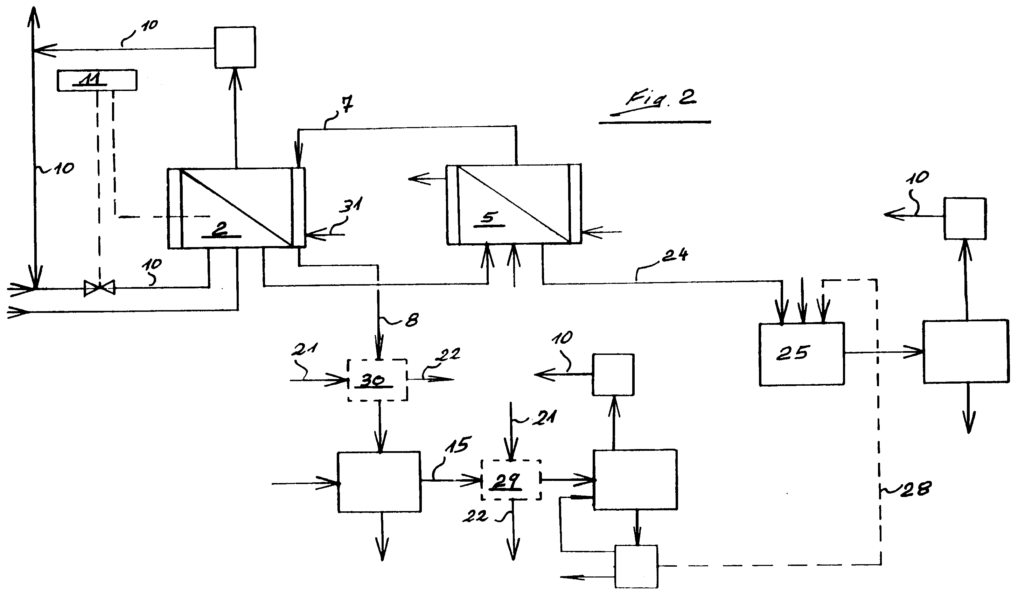

Ist ein Mutterlaugenüberschuß vorhanden oder will man Brom und Jod nicht durch Oxidation aus der Mutterlauge entfernen so kann diese, wie in FIG. 2 als gestrichelte Linie 28 dargestellt, ganz oder teilweise wie der Eindampfrückstand 24 aus der zweiten Eindampfstufe 5 der Neutralisation 25 zugeführt werden.

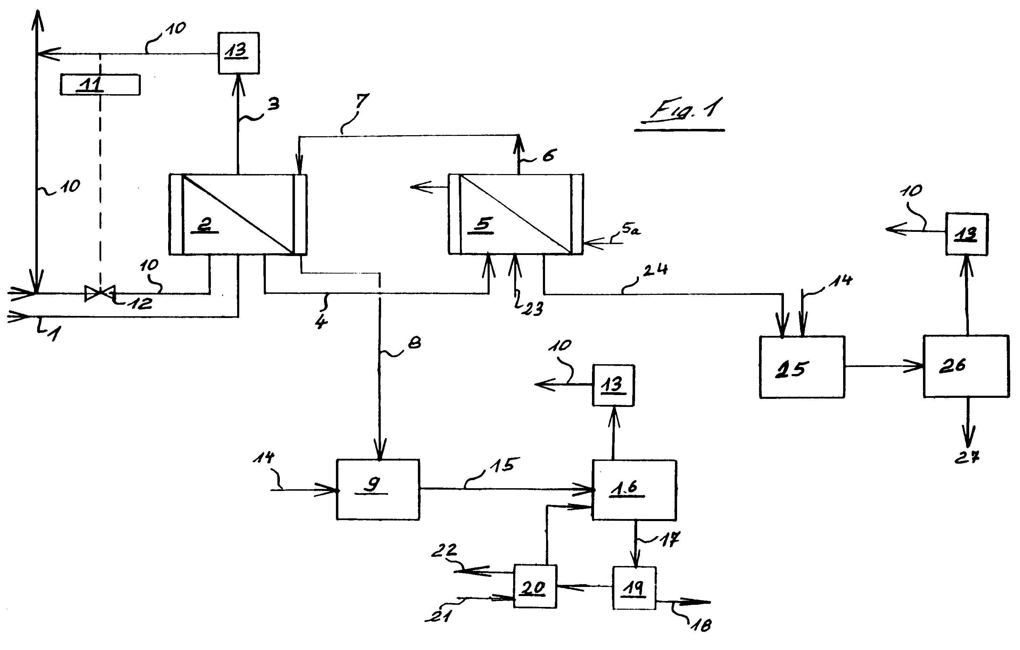

Die Oxidation von Brom und Jod kann alternativ zur Oxidation 20 gemäß FIG. 1 auch an der Neutralisationslösung 15 oder an der kondensierten Säurelösung 8 erfolgen. Die Alternativen sind in der FIG. 2 als gestrichelte Blöcke 29 bzw. 30 dargestellt.

Die Leitfähigkeitsmessung 11 hinsichtlich der Zugabe von Verdünnungsmittel 10 zur ersten Eindampfstufe 2 kann alternativ durch eine Messung der Säurekonzentration der Abfallsalzsäure 1 in der ersten Eindampfstufe 2 vorgenommen werden.

Reicht die Wärmemenge der aus der zweiten Eindampfstufe 5 ausgetriebenen Brüden 7 zur Beheizung der ersten Eindampfstufe 2 nicht aus, so ist vorgesehen, die erste Stufe 2 zusätzlich mit Hilfsdampf 31 zu beheizen.

## Patentansprüche

1. Verfahren zur Aufarbeitung einer anorganisch verunreinigten Abfallsalzsäure aus der Wäsche eines mindestens HCl-, Brom-, Jod-, HF und schwermetallhaltigen Abgases mit Wasser, gegebenenfalls mit nachfolgender Behandlung mit einer Absorptionsmittel-Lösung zur Entfernung von Schwefeldioxid, insbesondere aus der Wäsche von Rauchgasen aus Müllverbrennungsanlagen,
bei der die Abfallsalzsäure in einer ersten Eindampfstufe im wesentlichen bis zur azeotropen Konzentration unter Austreiben von Wasser aufkonzentriert wird,
in einer zweiten Eindampfstufe Säure mit Wasser aus dem Konzentrat ausgetrieben wird,
die ausgetriebene Säure zusammen mit dem Wasser kondensiert und
mit einem Neutralisationsmittel neutralisiert wird
und in einer mindestens einstufigen Eindampfkristallisation Salz als Wertstoff aus Mutterlauge auskristallisiert wird,
Jod und Brom durch ein Oxidationsmittel, vorzugsweise Chlor, oxidiert und danach abgezogen werden
oder ohne Oxidation mit der Mutterlauge der Eindampfkristallisation abgezogen werden,
und der Eindampfrückstand aus der zweiten Eindampfstufe zu einem Reststoff aufgearbeitet wird.

2. Verfahren nach Anspruch 1, **dadurch gekennzeichnet,** daß die erste Eindampfstufe mit den aus der zweiten Eindampfstufe ausgetriebenen Säurebrüden beheizt wird und die Säurekonzentration in der ersten Stufe mit einem wässrigen Verdünnungsmittel geregelt wird.

3. Verfahren nach Anspruch 2, **dadurch gekennzeichnet,** daß als Verdünnungsmittel nach der ersten Eindampfstufe kondensiertes Wasser, nach der Eindampfkristallisation kondensiertes Wasser und/oder bei der Reststoffaufarbeitung anfallendes Wasser der ersten Eindampfstufe zugeführt wird.

4. Verfahren nach mindestens einem der Ansprüche 1 bis 3, **dadurch gekennzeichnet,** daß Jod und Brom vor der Neutralisation aus der kondensierten Säure-Lösung oxidiert werden.

5. Verfahren nach mindestens einem der Ansprüche 1 bis 3, **dadurch gekennzeichnet,** daß Jod und Brom vor der Eindampfkristallisation in der Neutralisationslösung oxidiert werden.

6. Verfahren nach mindestens einem der Ansprüche 1 bis 3, **dadurch gekennzeichnet,** daß Jod und Brom in der Mutterlauge der Eindampfkristallisation oxidiert werden.

7. Verfahren nach Anspruch 6,
**dadurch gekennzeichnet,** daß die Oxidation an zur Eindampfkristallisation nach einer Feststoffabtrennung des Salzes als Wertstoff zurückzuführender Mutterlauge erfolgt.

8. Verfahren nach mindestens einem der Ansprüche 1 bis 6, **dadurch gekennzeichnet,** daß der Verdampfungsrückstand der zweiten Eindampfstufe neutralisiert, eingedampft und zu einem Reststoff getrocknet wird, und daß Mutterlauge der Eindampfkristallisation zusammen mit dem Verdampfungsrückstand der zweiten Eindampfstufe neutralisiert wird.

9. Verfahren nach mindestens einem der Ansprüche 1 bis 8, **dadurch gekennzeichnet,** daß die Abfallsalzsäure in der ersten Eindampfstufe bei einem Druck zwischen 10 und 150 mbar aufkonzentriert wird, und die Säurelösung in der zweiten Eindampfstufe bei einem Druck zwischen 37 und 850 mbar aus dem Konzentrat ausgetrieben wird.

10. Verfahren nach mindestens einem der Ansprüche 1 bis 9, **dadurch gekennzeichnet,** daß als Neutralisationsmittel K, Na, Ca, Mg, NaOH, KOH, Ca(OH)₂, Mg(OH)₂ oder Mischungen hiervon zugesetzt werden.

11. Verfahren nach mindestens einem der Ansprüche 1 bis 10, **dadurch gekennzeichnet,** daß zur Fluoridausfällung CaCl₂, KCl, MgCl₂ oder Mischungen hiervon der zweiten Eindampfstufe zugesetzt werden.
